(19) Europäisches Patentamt
European Patent Office
Office européen des brevets

(11) **EP 2 917 537 B1**

(12) **FASCICULE DE BREVET EUROPEEN**

(45) Date de publication et mention de la délivrance du brevet:
**01.08.2018 Bulletin 2018/31**

(51) Int Cl.:
*F02C 9/28* (2006.01)    *B64D 31/00* (2006.01)
*G05B 17/00* (2006.01)

(21) Numéro de dépôt: **13782763.0**

(22) Date de dépôt: **27.09.2013**

(86) Numéro de dépôt international:
**PCT/FR2013/052307**

(87) Numéro de publication internationale:
**WO 2014/053752 (10.04.2014 Gazette 2014/15)**

(54) **METHODE DE SURVEILLANCE D'UN DEFAUT DE POUSSEE D'UN TURBOREACTEUR D'AERONEF**

VERFAHREN ZUR ÜBERWACHUNG EINES SCHUBKRAFTFEHLERS EINES MANTELSTROM-TRIEBWERKS EINES FLUGZEUGS

METHOD FOR MONITORING A THRUST FAULT OF AN AIRCRAFT TURBOFAN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2012 FR 1259367**

(43) Date de publication de la demande:
**16.09.2015 Bulletin 2015/38**

(73) Titulaire: **Safran Aircraft Engines**
**75015 Paris (FR)**

(72) Inventeur: **DJELASSI, Cédrick**
**77550 Moissy Cramayel Cedex (FR)**

(74) Mandataire: **Gevers & Orès**
**41 avenue de Friedland**
**75008 Paris (FR)**

(56) Documents cités:
**EP-A2- 1 420 153    FR-A1- 2 883 330**

**Description**

**DOMAINE TECHNIQUE GENERAL ET ART ANTERIEUR**

La présente invention concerne le domaine de la surveillance de la poussée d'une turbomachine, en particulier, un turboréacteur pour la propulsion d'un aéronef.

De manière classique, un aéronef est propulsé par au moins deux turboréacteurs montés respectivement sur les deux ailes de l'aéronef. Pour commander la poussée des turboréacteurs, le pilote de l'aéronef actionne de manière traditionnelle une manette de commande des gaz pour chaque turboréacteur.

La poussée de chaque turboréacteur est classiquement surveillée de manière à s'assurer que la poussée réelle du turboréacteur est conforme à la consigne de poussée choisie par le pilote de l'aéronef à l'aide de la manette de commande des gaz. La poussée effective d'un turboréacteur ne peut être mesurée que de manière indirecte pour un turboréacteur. En pratique, pour un turboréacteur à double corps comportant un corps basse pression et un corps haute pression, il est connu de surveiller le régime de rotation du corps basse pression, également désigné « régime N1 », pour déterminer la poussée du turboréacteur.

Dans la présente demande, par abus de langage, le terme « mesure de poussée » est utilisé pour désigner une mesure d'un paramètre représentatif de la poussée, par exemple, le régime de rotation N1 ou le paramètre EPR pour « Engine Pressure Ratio ».

Une solution immédiate pour mesurer un défaut de poussée d'un turboréacteur serait de comparer, à chaque instant, le régime $N1_{cons}$ correspondant à la consigne de poussée définie par la manette des gaz au régime effectif $N1_{EFF}$ mesuré en temps réel sur le turboréacteur au moyen de capteurs embarqués.

En pratique, lorsque le pilote commande une augmentation ou une diminution de la poussée du turboréacteur, le turboréacteur réagit avec un temps de latence qui peut être de l'ordre de quelques secondes. Au cours de cette phase transitoire, du fait de ce temps de latence variable, toute détection d'un défaut de poussée est impossible ce qui retarde l'activation des systèmes de sécurité (système UHT pour « Uncontrolled High Thrust » et ATTCS pour « Automatic Take Off Thrust Control System ») et présente un inconvénient. Les documents US2883330 et EP1420153 divulguent des systèmes et méthodes de surveillance de défauts dans un turboréacteur d'aéronef selon l'état de l'art.

**PRESENTATION GENERALE DE L'INVENTION**

Afin d'éliminer au moins certains de ces inconvénients, l'invention concerne une méthode de surveillance d'un défaut de poussée d'un turboréacteur d'aéronef selon la revendication 1. De manière avantageuse, on modélise précisément le retard entre la poussée effective et la consigne de poussée pour réaliser une comparaison cohérente des deux valeurs au cours de la phase transitoire. Ainsi, on peut détecter de manière rapide et réactive tout défaut de poussée au cours de la phase transitoire. En particulier, si un défaut de poussée est détecté sur un turboréacteur, on peut corriger ce défaut à l'aide de l'autre turboréacteur qui est également dans sa phase transitoire.

De préférence, la poussée effective est obtenue de manière indirecte par mesure du régime de rotation d'un corps rotatif du turboréacteur, par exemple, le corps basse pression. Il va de soi que le paramètre EPR pour « Engine Pressure Ratio » pourrait également être utilisé.

De manière préférée, on réalise une initialisation de la fonction de filtrage lors du démarrage du turboréacteur. De préférence encore, on réalise une initialisation de la fonction de filtrage en fonction du signe de l'écart de poussée. Une telle initialisation permet de limiter le risque de fausses alarmes lors de la surveillance d'un défaut de poussée.

De préférence, lors de l'initialisation, la poussée modélisée antérieure est égale à la poussée effective de la turbomachine. On obtient ainsi une convergence rapide du modèle de phase transitoire afin d'obtenir la constante de temps la plus pertinente à l'itération donnée.

Selon un aspect préféré, la fonction de filtrage est une fonction passe-bas, de préférence, une fonction de transfert d'ordre 2 afin de modéliser de manière pertinente le retard de la poussée effective lors de la phase transitoire.

De préférence, le turboréacteur comporte un dispositif de régulation de ralenti adapté pour préempter une consigne définie par une manette de commande des gaz par une valeur de ralenti en fonction de conditions ambiantes déterminées du turboréacteur, la méthode comporte, pour la surveillance d'une sur-poussée, une étape de mesure d'au moins un paramètre ambiant du turboréacteur de manière à définir si la consigne de la manette de commande des gaz est préemptée par la valeur de ralenti.

Ainsi, la méthode de surveillance permet de détecter de manière indirecte si la consigne de poussée du turboréacteur est définie par la consigne de la manette de commande des gaz ou par la valeur de ralenti. Cette détection indirecte du ralenti, sans relation avec le dispositif de régulation de ralenti, permet d'augmenter la fiabilité de la surveillance en évitant l'utilisation de modes communs.

De préférence, la méthode de surveillance comporte une détermination d'une valeur de ralenti modélisée au moyen d'un modèle de ralenti qui associe une valeur modélisée de ralenti à une ou plusieurs valeurs de paramètres ambiants du turboréacteur.

De préférence, le modèle de ralenti associe une valeur modélisée de ralenti à la pression ambiante du turboréacteur et/ou la température ambiante du turboréacteur.

Selon un aspect de l'invention, le seuil d'alarme est un seuil paramétrable, le turboréacteur comporte des moyens de surveillance de l'état d'au moins une condition auxiliaire du turboréacteur et on applique un paramètre de pénalité audit seuil d'alarme en cas de détection d'un état anormal de ladite condition auxiliaire. L'utilisation d'un faisceau d'indices relatif à un défaut de poussée permet d'augmenter de manière significative la sensibilité de la détection. Les conditions auxiliaires peuvent être diverse (extinction du turboréacteur, pompage, accélération de l'arbre haute pression, évolution de la dérivée de l'écart de poussée, etc.).

De préférence, on applique un paramètre de pénalité audit seuil d'alarme qui est fonction de la criticité de la condition auxiliaire surveillée. Ainsi, si une condition auxiliaire critique est dans un état anormal, le seuil d'alarme est configuré pour être déclenché au moindre écart de poussée. En hiérarchisant les conditions auxiliaires, on définit de manière pertinente le seuil d'alarme ce qui limite le risque de fausses alarmes tout en augmentant la sensibilité de la surveillance.

## PRESENTATION DES FIGURES

L'invention sera mieux comprise à la lecture de la description qui va suivre, donnée uniquement à titre d'exemple, et se référant aux dessins annexés sur lesquels :

- la figure 1 est un diagramme schématique de la méthode de surveillance de la sous-poussée d'un turboréacteur selon l'invention ;
- la figure 2 est un diagramme schématique de l'étape de traitement de la consigne de poussée lors de la mise en oeuvre de la méthode de la figure 1 ;
- la figure 3 représente un premier diagramme de surveillance d'une sur-poussée et un deuxième diagramme de surveillance d'une sous-poussée ;
- la figure 4 est un diagramme schématique d'une étape de gestion du ralenti lors d'une surveillance d'une sur-poussée ;
- la figure 5 est un diagramme schématique général du paramétrage du seuil d'alarme ;
- la figure 6 est un diagramme schématique du paramétrage du seuil d'alarme par surveillance de la vitesse d'évolution de l'écart de poussée ;
- la figure 7 est un diagramme schématique du paramétrage du seuil d'alarme par surveillance de la vitesse de rotation d'un corps haute pression du turboréacteur ; et
- la figure 8 est un diagramme schématique du paramétrage du seuil d'alarme par détection d'un événement de pompage et/ou d'extinction du turboréacteur.

Il faut noter que les figures exposent l'invention de manière détaillée pour mettre en oeuvre l'invention, lesdites figures pouvant bien entendu servir à mieux définir l'invention le cas échéant.

## DESCRIPTION D'UN OU PLUSIEURS MODES DE REALISATION ET DE MISE EN OEUVRE

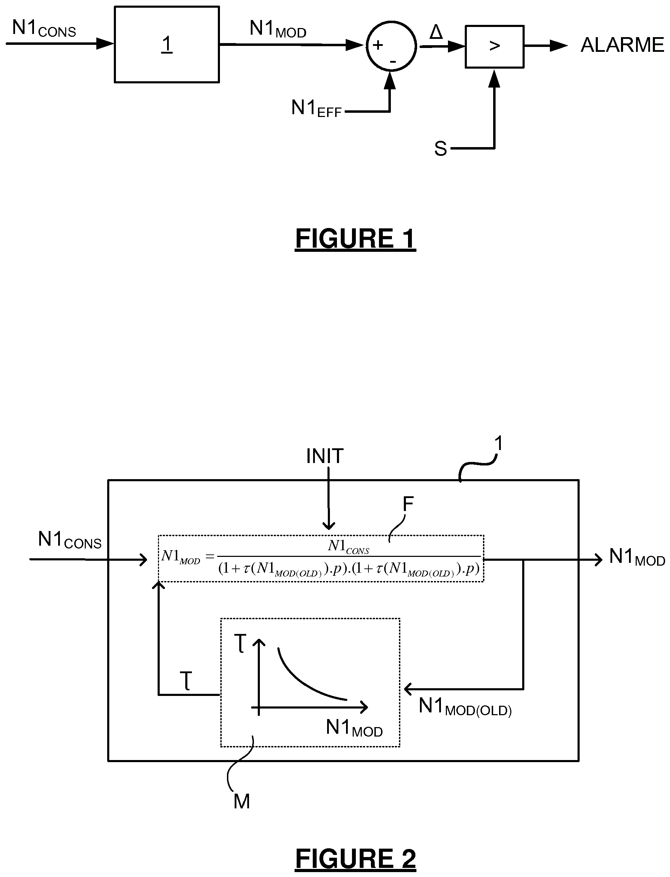

La figure 1 est une représentation schématique d'une méthode selon l'invention pour la surveillance d'un défaut de poussée d'un turboréacteur d'aéronef au moyen d'un calculateur embarqué sur ledit aéronef lors d'une modification de la consigne de poussée dudit turboréacteur.

L'invention va être présentée pour un turboréacteur à double corps comportant un corps basse pression et un corps haute pression. Par souci de clarté, on utilise le régime de rotation du corps basse pression, également désigné « régime N1 », pour déterminer la poussée du turboréacteur. Il va de soi que d'autres paramètres du turboréacteur qui sont fonction de la poussée pourraient également être utilisés, en particulier, le paramètre EPR pour « Engine Pressure Ratio ».

La consigne de poussée $N1_{CONS}$ correspond dans cet exemple au régime de consigne du corps basse pression. De manière préférée, la consigne de poussée $N1_{CONS}$ est définie par le pilote de l'aéronef, sur lequel est monté le turboréacteur, au moyen d'une manette de commande des gaz.

De manière avantageuse, la consigne de poussée $N1_{CONS}$ est connue de manière précise et fiable. En effet, la consigne de poussée $N1_{CONS}$ est redondée ce qui garantit que la méthode de surveillance utilise une entrée saine, c'est-à-dire, non-corrompue. La fiabilité de la méthode de surveillance selon l'invention est alors améliorée.

Comme indiqué dans le préambule, la poussée effective du turboréacteur $N1_{EFF}$ est modifiée au cours d'une phase transitoire de poussée jusqu'à atteindre la consigne de poussée $N1_{CONS}$. La poussée effective $N1_{EFF}$ correspond, dans cet exemple, au régime effectif du corps basse pression. De manière préférée, la poussée effective $N1_{EFF}$ est mesurée de manière redondée par des capteurs du turboréacteur et est considérée comme une entrée saine.

Selon l'invention, en référence à la figure 1, la méthode comporte :

- une étape de traitement 1 de la consigne de poussée $N1_{CONS}$ lors de la phase transitoire de poussée de manière à déterminer une poussée modélisée $N1_{MOD}$ ;
- une étape de mesure de la poussée effective $N1_{EFF}$ ;
- une étape de comparaison de ladite poussée modélisée $N1_{MOD}$ à ladite poussée effective $N1_{EFF}$ de manière à déterminer un écart de poussée $\Delta$ ;
- une étape de comparaison dudit écart de poussée $\Delta$ à un seuil d'alarme S ; et
- une étape d'émission d'une alarme ALARME en cas de dépassement dudit seuil S.

La méthode est remarquable en ce que, au cours de l'étape de traitement 1, en référence à la figure 2, on traite la consigne de poussée $N1_{CONS}$ au moyen d'une fonction de filtrage F et d'un modèle de phase transitoire M de manière à obtenir une poussée modélisée $N1_{MOD}$.

Comme illustré à la figure 2, l'étape de traitement est itérative. A une itération donnée, une poussée modélisée antérieure $N1_{MOD(OLD)}$ étant connue, le modèle de phase transitoire M fournit une constante de temps T à partir de la poussée modélisée antérieure $N1_{MOD(OLD)}$, la fonction de filtrage F fournit une poussée modélisée $N1_{MOD}$ à partir de la constante de temps obtenue T, de la poussée modélisée antérieure $N1_{MOD(OLD)}$ et de la consigne de poussée $N1_{CONS}$.

Autrement dit, l'invention se propose de transformer la consigne de poussée $N1_{CONS}$ en une poussée modélisée $N1_{MOD}$ qui tient compte de la phase transitoire de poussée dudit turboréacteur. Ainsi, la poussée modélisée $N1_{MOD}$ et la poussée réelle $N1_{EFF}$ sont corrélées lors de la phase transitoire de poussée ce qui permet de les comparer de manière pertinente à tout instant de la phase transitoire. Cela permet de détecter tout défaut de poussée (sous-poussée ou sur-poussée) de manière réactive. Il n'est ainsi plus nécessaire d'attendre que la poussée soit stabilisée pour détecter un défaut de poussée comme dans l'art antérieur.

Comme illustré à la figure 2, la consigne de poussée $N1_{CONS}$ est filtrée par une fonction de filtrage F passe-bas d'ordre 2 au cours de l'étape de traitement 1. La fonction de filtrage F est une fonction de transfert, connue en soi de l'homme du métier, qui permet de fournir une poussée modélisée $N1_{MOD}$ en fonction du constante de temps T afin de permettre une comparaison avec la poussée effective $N1_{EFF}$. De manière préférée, la fonction de filtrage F possède un gain unitaire de manière à ce qu'en fin de phase transitoire la poussée modélisée $N1_{MOD}$ égale la consigne de poussée $N1_{CONS}$.

Toujours en référence à la figure 2, le modèle de phase transitoire M associe une valeur de poussée modélisée $N1_{MOD}$ à une valeur de constante de temps T. Le modèle de phase transitoire M est classiquement obtenu par retour d'expérience à partir de mesures réalisées sur un même type de turboréacteur. Comme illustré à la figure 2, la poussée modélisée $N1_{MOD}$ d'une itération déterminée est définie à partir de la poussée modélisée $N1_{MOD(OLD)}$ obtenue à l'itération précédente et de la constante de temps T.

De manière préférée, le modèle de phase transitoire M est différent pour une augmentation de la poussée ou pour une diminution. Aussi, il est prévu un modèle de phase transitoire M pour chaque type de modification de la poussée.

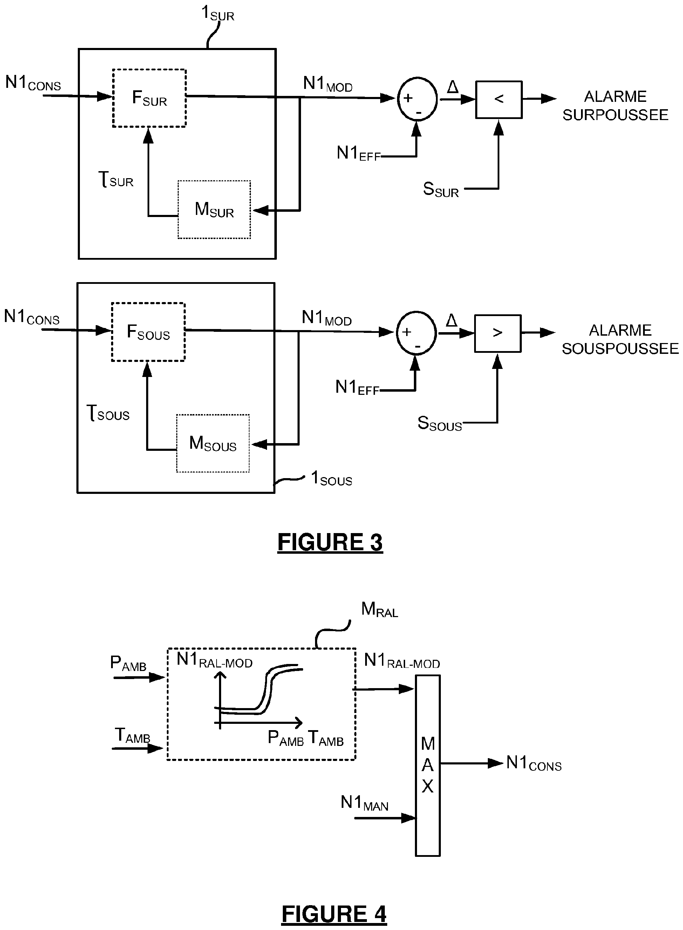

Comme illustré à la figure 3, la sur-poussée et la sous-poussée du turboréacteur sont surveillées par deux méthodes distinctes qui comprennent des étapes de traitement différentes $1_{SUR}$, $1_{SOUS}$ étant donné qu'elles font appel à des modèles de phases transitoires différents $M_{SUR}$, $M_{SOUS}$ et des fonctions de filtrage différentes $F_{SUR}$, $F_{SOUS}$. De même, les seuils d'alarme sont différents $S_{SUR}$, $S_{SOUS}$ en fonction du défaut de poussée surveillé comme illustré à la figure 3.

Par souci de clarté, l'invention est présentée par la suite pour le cas d'une sous-poussée en référence à la représentation schématique générale de la figure 1.

De manière préférée, comme illustré à la figure 2, on réalise une initialisation INIT de la fonction de filtrage F, d'une part, lors du démarrage du turboréacteur et, d'autre part, en fonction du signe de l'écart de poussée Δ.

Étant donné que la fonction de filtrage F est d'ordre 2, une initialisation permet à cette dernière de débuter pour des valeurs de poussée modélisée $N1_{MOD(OLD)}$ prédéterminées. Une initialisation de la fonction de filtrage F en fonction du signe de l'écart de poussée Δ permet d'éviter une divergence des méthodes de surveillance en fonction du type de défaut surveillé. A titre d'exemple, si la poussée effective $N1_{EFF}$ est supérieure à la poussée modélisée $N1_{MOD}$ (hypothèse de sur-poussée), la fonction de filtrage $F_{sous}$ de la méthode de surveillance de la sous-poussée (voir Figure 3) peut être initialisée afin d'éviter qu'elle fournisse des résultats incohérents, c'est-à-dire, des fausses alarmes. En particulier, une telle initialisation est avantageuse lorsque des accélérations sont enchaînées avec des décélérations.

De manière préférée, lors de l'initialisation, la poussée modélisée antérieure $N1_{MOD(OLD)}$ est égale à la poussée effective $N1_{EFF}$ du turboréacteur.

## Prise en compte du dispositif de régulation de ralenti

Selon un aspect préféré de l'invention, le turboréacteur comporte un dispositif de régulation de ralenti adapté pour préempter une consigne de poussée, définie par une manette de commande des gaz, par une valeur de ralenti en fonction de conditions ambiantes déterminées du turboréacteur.

Par exemple, en référence à la figure 4, lorsque le pilote de l'aéronef souhaite limiter au maximum la poussée du turboréacteur, le dispositif de régulation de ralenti préempte la consigne de poussée $N1_{MAN}$ définie par la manette de commande des gaz par une valeur de ralenti $N1_{RAL}$ afin que la diminution de poussée ne soit pas trop importante pour le turboréacteur vis-à-vis d'autres limitations que le régime N1 (régime N2, débit de carburant minimal pour limiter le risque d'extinction, etc.). La valeur de ralenti $N1_{RAL}$ n'est pas calculée mais résulte de diverses limitations du dispositif de régulation de ralenti de manière à assurer un cycle thermodynamique optimal pour le turboréacteur lors de sa décélération.

Néanmoins, en ce qui concerne la méthode surveillance de défaut de sur-poussée selon l'invention, il est nécessaire de prendre en compte le fait que la valeur de ralenti $N1_{RAL}$ correspond à la consigne de poussée $N1_{CONS}$ lors du ralenti.

A cet effet, en référence à la figure 4, pour la surveillance d'une sur-poussée, la méthode comporte une étape de comparaison de la consigne de poussée de la manette $N1_{MAN}$ à la valeur de ralenti $N1_{RAL}$, la poussée de valeur maximale étant utilisée comme consigne de poussée $N1_{CONS}$ dans l'étape de traitement 1 précitée. Autrement dit, si la consigne de poussée $N1_{MAN}$ définie par la manette de commande des gaz est supérieure à la valeur de ralenti $N1_{RAL}$ induite par le dispositif de régulation du ralenti, la méthode de surveillance demeure conforme au mode de réalisation présenté à la figure 1.

Par contre, si la consigne de poussée $N1_{MAN}$ définie par la manette de commande des gaz est inférieure à la valeur de ralenti $N1_{RAL}$ induite par le dispositif de régulation de ralenti, la méthode de surveillance utilise la valeur de ralenti $N1_{RAL}$ comme consigne de poussée $N1_{CONS}$ dans l'étape de traitement 1 précitée.

Par souci de fiabilité de la méthode de surveillance, il est important de connaître la valeur de ralenti $N1_{RAL}$ indépendamment du dispositif de régulation du ralenti. A cet effet, on modélise la valeur de ralenti comme cela sera décrit par la suite.

Dans l'exemple de la figure 4, la valeur de ralenti $N1_{RAL-MOD}$ est obtenue à partir d'un modèle de ralenti $M_{RAL}$ associant une valeur modélisée de ralenti $N1_{RAL-MOD}$ à une ou plusieurs valeurs de paramètres ambiants du turboréacteur. Néanmoins, il va de soi que la valeur modélisée de ralenti $N1_{RAL-MOD}$ pourrait être obtenue par d'autres moyens. En mesurant des paramètres ambiants du turboréacteur qui sont caractéristiques de l'activation du dispositif de régulation de ralenti, on peut déterminer de manière indirecte la valeur de ralenti $N1_{RAL-MOD}$.

Dans cet exemple, en référence à la figure 4, le modèle de ralenti $M_{RAL}$ associe une valeur modélisée de ralenti $N1_{RAL-MOD}$ à la pression ambiante du turboréacteur $P_{amb}$ et la température ambiante du turboréacteur $T_{amb}$. En pratique, les paramètres ambiants du turboréacteur $P_{amb}$ et $T_{amb}$ sont des paramètres redondés considérés comme fiables. En particulier, ces paramètres ne présentent pas de modes communs avec les défauts de poussée à surveiller. Il va de soi que d'autres paramètres ambiants pourraient également convenir. De manière similaire au modèle de phase transitoire M, le modèle de ralenti $M_{RAL}$ est obtenu par retour d'expérience à partir de mesures réalisées sur un même type de turboréacteur.

En référence à la figure 4, la méthode de surveillance comporte une étape de mesure des paramètres ambiants $P_{amb}$ et $T_{amb}$ du turboréacteur de manière à définir la valeur de ralenti modélisée $N1_{RAL-MOD}$ à l'aide du modèle de ralenti $M_{RAL}$. Une fois la valeur de ralenti modélisée $N1_{RAL-MOD}$ obtenue, celle-ci est comparée à la consigne de poussée $N1_{MAN}$ de la manette de commande, la poussée maximale étant utilisée comme consigne de poussée $N1_{CONS}$ pour l'étape de traitement 1.

Grâce à la prise en compte du ralenti, on améliore la précision de la surveillance de la sur-poussée. En particulier, cela permet d'éviter de déclarer des défauts de sur-poussée alors que le turboréacteur est normalement régulé sur une valeur élevée de ralenti.

**Seuil d'alarme variable**

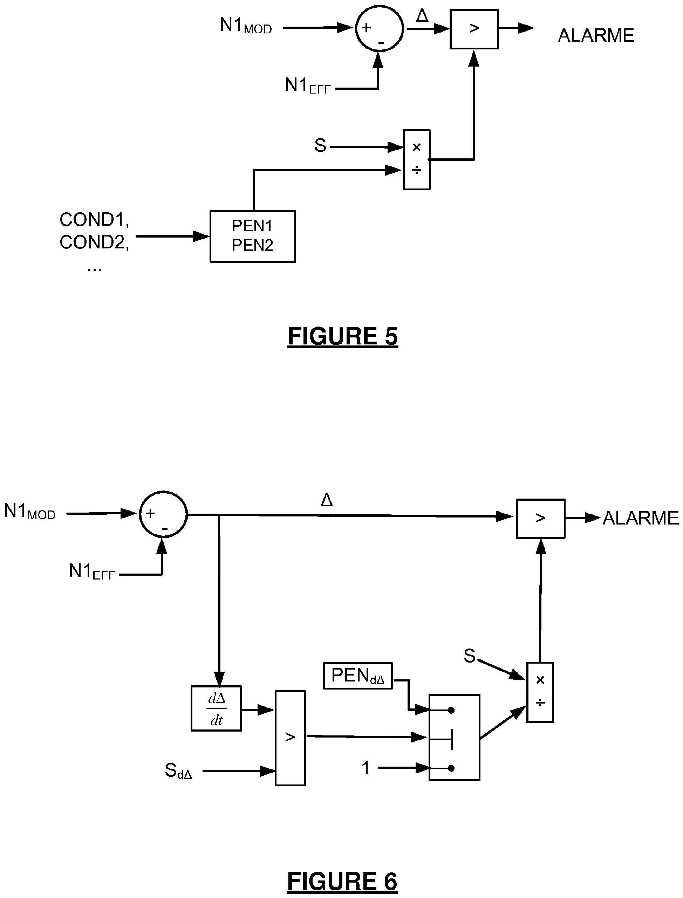

Afin d'améliorer la robustesse de la méthode de surveillance par rapport aux dispersions entre différents turboréacteurs de même type, le seuil d'alarme S est, de préférence, un seuil variable qui tient compte de conditions auxiliaires afin, par exemple, de diminuer la valeur du seuil d'alarme S et ainsi augmenter la sensibilité de la détection. Autrement dit, en référence à la figure 5, la méthode met en oeuvre une surveillance d'au moins une condition auxiliaire du turboréacteur COND1, COND2. En cas de détection d'un dysfonctionnement relatif à ladite condition auxiliaire COND1, COND2, le seuil d'alarme S est pénalisé par un paramètre de pénalité PEN1, PEN2 de manière à favoriser une détection rapide d'un défaut de poussée.

De manière préférée, la méthode met en oeuvre une surveillance d'une pluralité de conditions auxiliaires COND1, COND2 du turboréacteur. Les conditions auxiliaires COND1, COND2 sont classées en fonction de leur criticité. Plus la condition auxiliaire COND1, COND2 est critique, plus le paramètre de pénalité PEN1, PEN2 du seuil d'alarme S est important. Ainsi, le seuil S est adaptatif pour permettre une réaction rapide tout en limitant le risque de fausse alarme ce qui est avantageux.

En fonction du type de défaut de poussée surveillé (sous-poussée ou sur-poussée), le paramètre de pénalité PEN1, PEN2 peut être soustrait/additionné au seuil S. Il va de soi que le paramètre de pénalité PEN1, PEN2 pourrait également se présenter sous la forme d'un coefficient multiplicateur, d'une fonction mathématique, etc. De manière préférée, le paramètre de pénalité PEN1, PEN2 peut être fonction de la condition auxiliaire surveillée COND1, COND2 de manière à moduler de manière progressive le seuil d'alarme S.

Par la suite, plusieurs conditions auxiliaires vont être présentées en association avec leurs paramètres de pénalité pour la surveillance d'une sous-poussée d'un turboréacteur.

**a) Mesure de la vitesse d'évolution de l'écart de poussée $\Delta$**

A titre d'exemple, en référence à la figure 6, la méthode comporte une étape de mesure de la vitesse d'évolution de l'écart de poussée, c'est-à-dire le paramètre $\dfrac{d\Delta}{dt}$, et une étape de comparaison de la vitesse d'évolution de l'écart de poussée $\dfrac{d\Delta}{dt}$ à un seuil prédéterminé $S_{d\Delta}$.

Si le seuil $S_{d\Delta}$ n'est pas dépassé, le seuil d'alarme S n'est pas modifié. A l'inverse, si le seuil $S_{d\Delta}$ est dépassé, le seuil d'alarme S est diminué par un paramètre de pénalité $PEN_{d\Delta}$ ce qui a pour conséquence de rendre la détection d'un défaut de poussée plus sensible comme illustré à la figure 6.

Autrement dit, si l'évolution de l'écart de poussée $\Delta$ est très rapide, on peut en conclure que la poussée effective $N1_{EFF}$ du turboréacteur correspond de moins en moins à la poussée modélisée $N1_{MOD}$ ce qui est caractéristique d'un défaut de poussée.

De manière préférée, le paramètre de pénalité $PEN_{d\Delta}$ est fonction de la vitesse d'évolution de l'écart de poussée $\Delta$ ce qui permet de moduler de manière progressive le seuil d'alarme S. A titre d'exemple, le paramètre de pénalité $PEN_{d\Delta}$ peut se présenter sous la forme d'un coefficient égal à 0,5 pour une évolution rapide de l'écart de poussée $\Delta$ et sous la forme d'un coefficient égal à 0,2 pour une évolution très rapide de l'écart de poussée $\Delta$.

### b) Mesure de vitesse du corps haute pression

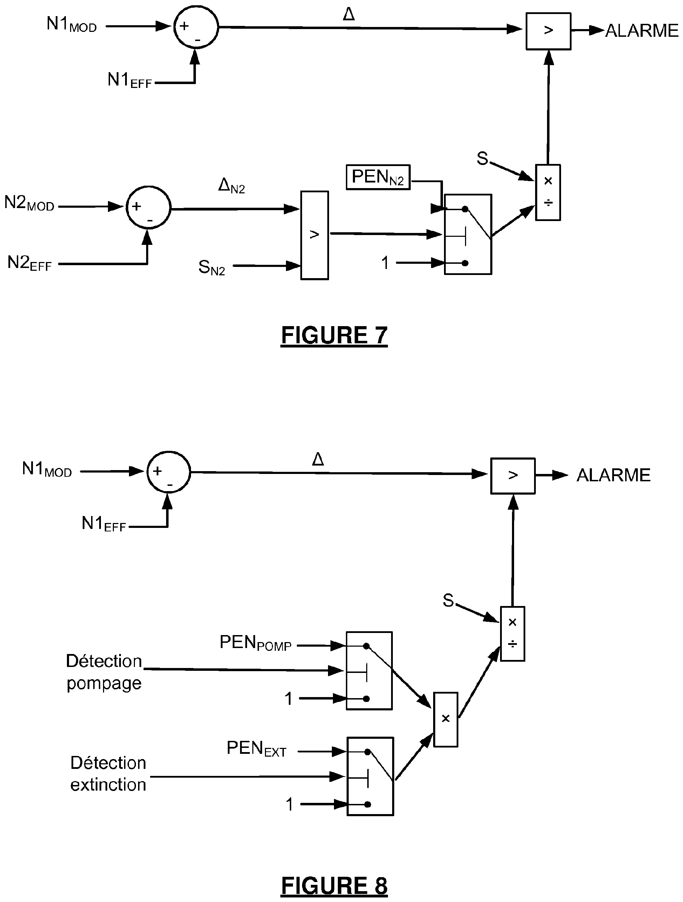

A titre d'exemple, en référence à la figure 7, la méthode comporte une étape de mesure de la vitesse du corps haute pression, c'est-à-dire le régime N2 du turboréacteur.

De manière similaire au corps basse pression, la vitesse effective du corps haute pression $N2_{EFF}$ est comparée à une vitesse modélisée $N2_{MOD}$ qui est déterminée directement en fonction de la position de la manette de commande des gaz ou indirectement au moyen d'un modèle de phase transitoire propre à l'évolution de la vitesse du corps haute pression N2 similaire au modèle de phase transitoire M présenté précédemment.

Autrement dit, on réalise une étape de mesure l'écart $\Delta_{N2}$ entre la vitesse effective $N2_{EFF}$ et la vitesse de modélisée $N2_{MOD}$ et on réalise une étape de comparaison 7 cet écart de régime haute pression $\Delta_{N2}$ à un seuil haute pression $S_{N2}$ de valeur prédéterminée comme illustré à la figure 7.

Si le seuil $S_{N2}$ n'est pas dépassé, le seuil d'alarme S n'est pas modifié. A l'inverse, si le seuil $S_{N2}$ est dépassé, le seuil d'alarme S est diminué par un paramètre de pénalité $PEN_{N2}$ ce qui a pour conséquence de rendre la détection d'un défaut de poussée plus sensible.

En effet, on peut en conclure que la vitesse effective $N2_{EFF}$ du turboréacteur correspond de moins en moins à sa vitesse modélisée $N2_{MOD}$ ce qui est caractéristique d'un défaut de poussée.

Une telle condition auxiliaire permet d'augmenter la fiabilité de la surveillance. En effet, le rapport du régime N1 sur le régime N2 n'est pas linéaire au cours du temps. En particulier, le temps de réponse du corps haute pression est plus faible que celui du corps basse pression. Ainsi, le corps haute pression accélère plus vite à bas régime que le corps basse pression. Pour cette raison, une surveillance, d'une part, du régime du corps basse pression N1 et, d'autre part, du régime du corps haute pression N2, permet de surveiller de manière optimale un défaut de poussée.

Certains turboréacteurs sont régulés lors des phases transitoires en fonction d'une vitesse de consigne $N2_{CONS}$ ou en fonction de l'accélération $\dfrac{dN2}{dt}$. Aussi, selon cette première hypothèse, on réalise une étape de mesure de l'écart entre la vitesse effective $N2_{EFF}$ et la vitesse de consigne $N2_{CONS}$. Autrement dit, la vitesse de consigne $N2_{CONS}$ remplace la vitesse modélisée $N2_{MOD}$. Si le turboréacteur est régulé en fonction de l'accélération, l'accélération $\dfrac{dN2}{dt}$ remplace la vitesse modélisée $N2_{MOD}$.

### c) Détection d'événements auxiliaires

Outre la mesure du régime du corps basse pression N1 et du corps haute pression N2, le turboréacteur peut comprendre des moyens de détection de conditions auxiliaires pouvant affecter la poussée du turboréacteur.

A titre d'exemple, en référence à la figure 8, le turboréacteur peut comprendre des moyens de détection d'un pompage du turboréacteur afin d'appliquer un paramètre de pénalité de pompage $PEN_{POMP}$ au seuil d'alarme S en cas de détection d'un tel pompage.

De manière similaire, toujours en référence à la figure 8, le turboréacteur peut comprendre des moyens de détection d'une extinction du turboréacteur afin d'appliquer un paramètre de pénalité d'extinction $PEN_{EXT}$ au seuil d'alarme S en cas de détection d'une telle extinction.

Dans l'exemple de la figure 8, les paramètres de pénalité $PEN_{POMP}$ et $PEN_{EXT}$ sont utilisés de manière couplée mais il va de soi qu'ils pourraient être appliqués de manière indépendante au seuil d'alarme S. Ainsi, si un événement auxiliaire susceptible d'affecter la poussée est détecté (pompage ou extinction), on diminue la valeur du seuil d'alarme S afin d'améliorer la sensibilité de la détection.

En outre, dans un mode de réalisation préféré de l'invention, lesdits paramètres de pénalité $PEN_{POMP}$ et $PEN_{EXT}$ peuvent annuler le seuil d'alarme S afin de déclencher directement une alarme.

### d) Mesure d'évolution de la vitesse du corps basse pression ou haute pression

De préférence, la méthode peut comporter une étape de mesure de la vitesse d'évolution de l'écart $\Delta_{N1}$, $\Delta_{N2}$ au cours de la phase transitoire, c'est-à-dire les paramètres $\dfrac{d\Delta N1}{dt}$ ou $\dfrac{d\Delta N2}{dt}$, et une étape de comparaison à un seuil prédéterminé $S_{\Delta N1}$ ou $S_{\Delta N2}$. De manière similaire, le paramètre de pénalité peut être fonction de la vitesse d'évolution de l'écart $\Delta_{N1}$, $\Delta_{N2}$ ce qui permet de moduler de manière progressive le seuil d'alarme S.

De manière avantageuse, une telle surveillance permet de détecter tout défaut de poussée de manière très réactive. En effet, un défaut de poussée engendre une évolution anormale de l'écart $\Delta_{N1}$ ou $\Delta_{N2}$ qui peut être détecté rapidement.

**e) Mise en oeuvre d'une alarme prioritaire**

Dans un mode de réalisation préféré, les paramètres de pénalité ont une valeur négative pour une méthode de surveillance d'une sous-poussée. Ainsi, même si l'écart de poussée $\Delta$ est nul, une alarme peut être directement émise. Autrement dit, un paramètre de pénalité permet de déclencher des alarmes prioritaires qui sont indépendantes de l'écart de poussée $\Delta$. Cela permet avantageusement de disposer d'une méthode de surveillance hautement réactive.

Les conditions auxiliaires surveillées par le turboréacteur ont été présentées de manière indépendante dans les figures 6 à 8 mais il va de soi qu'elles peuvent être surveillées en combinaison.

Si un défaut de poussée est détecté sur un turboréacteur, on peut corriger ce défaut à l'aide de l'autre turboréacteur qui est également dans sa phase transitoire en modifiant la consigne de poussée qui lui est propre. Ainsi, la poussée est surveillée et corrigée en temps réel ce qui augmente la sécurité et la fiabilité.

**Revendications**

1. Méthode de surveillance d'un défaut de poussée d'un turboréacteur d'aéronef au moyen d'un calculateur embarqué sur ledit aéronef lors d'une modification de la consigne de poussée ($N1_{CONS}$) dudit turboréacteur, la poussée effective ($N1_{EFF}$) du turboréacteur étant modifiée au cours d'une phase transitoire pour atteindre la consigne de poussée ($N1_{CONS}$) désirée, méthode comportant :

   - Une étape de traitement de la consigne de poussée ($N1_{CONS}$) au moyen d'une fonction de filtrage (F) et d'un modèle de phase transitoire (M) obtenu par retour d'expérience à partir de mesures réalisées sur un même type de turboréacteur de manière à obtenir une poussée modélisée ($N1_{MOD}$) ;
   - Une étape de mesure de la poussée effective ($N1_{EFF}$) ;
   - Une étape de comparaison de ladite poussée modélisée ($N1_{MOD}$) à ladite poussée effective ($N1_{EFF}$) de manière à déterminer un écart de poussée ($\Delta$) ;
   - Une étape de comparaison dudit écart de poussée ($\Delta$) à un seuil d'alarme (S) ; et
   - Une étape d'émission d'une alarme en cas de dépassement dudit seuil d'alarme (S) ; la méthode étant **caractérisée en ce que** :
   - à une itération donnée, une poussée modélisée antérieure étant connue ($N1_{MOD(OLD)}$), le modèle de phase transitoire fournit une constante de temps (T) à partir de la poussée modélisée antérieure ($N1_{MOD(OLD)}$), la fonction de filtrage (F) fournit une poussée modélisée ($N1_{MOD}$) à partir de la constante de temps obtenue (T), de la poussée modélisée antérieure ($N1_{MOD(OLD)}$) et de la consigne de poussée ($N1_{CONS}$).

2. Méthode selon la revendication 1, dans laquelle on réalise une initialisation de la fonction de filtrage (F) en fonction du signe de l'écart de poussée ($\Delta$) lors du démarrage du turboréacteur, la poussée modélisée antérieure ($N1_{MOD(OLD)}$) étant égale à la poussée effective ($N1_{EFF}$) du turboréacteur lors de cette initialisation.

3. Méthode selon la revendication 1 ou 2, dans laquelle la fonction de filtrage (F) est une fonction passe-bas, de préférence, une fonction de transfert d'ordre 2.

4. Méthode selon l'une des revendications 1 à 3, dans laquelle, le turboréacteur comportant un dispositif de régulation de ralenti adapté pour préempter une consigne ($N1_{MAN}$), définie par une manette de commande des gaz, par une valeur de ralenti ($N1_{RAL}$) en fonction de conditions ambiantes déterminées du turboréacteur, la méthode comporte, pour la surveillance d'une sur-poussée, une étape de mesure d'au moins un paramètre ambiant du turboréacteur de manière à définir si la consigne de la manette de commande des gaz ($N1_{MAN}$) est préemptée par la valeur de ralenti ($N1_{RAL}$).

5. Méthode selon la revendication 4, dans laquelle, la méthode de surveillance comporte une détermination d'une valeur de ralenti modélisée ($N1_{RAL-MOD}$) au moyen d'un modèle de ralenti ($M_{RAL}$) qui associe une valeur modélisée de ralenti ($N1_{RAL-MOD}$) à une ou plusieurs valeurs de paramètres ambiants du turboréacteur.

6. Méthode selon la revendication 5, dans laquelle le modèle de ralenti ($M_{RAL}$) associe une valeur modélisée de ralenti ($N1_{RAL-MOD}$) à la pression ambiante du turboréacteur et/ou la température ambiante du turboréacteur.

7. Méthode selon l'une des revendications 1 à 6, dans laquelle le seuil d'alarme (S) est un seuil paramétrable, le turboréacteur comportant des moyens de surveillance de l'état d'au moins une condition auxiliaire (COND1, COND2) du turboréacteur, on applique un paramètre de pénalité (PEN1, PEN2) audit seuil d'alarme (S) en cas de détection d'un état anormal de ladite condition auxiliaire (COND1, COND2).

8. Méthode selon la revendication précédente, dans laquelle on applique un paramètre de pénalité (PEN1, PEN2) audit seuil d'alarme (S) qui est fonction de la criticité de la condition auxiliaire (COND1, COND2) surveillée.


**Patentansprüche**

1. Verfahren zum Überwachen eines Schubkraftfehlers eines Luftfahrzeug-Turbostrahltriebwerks mittels eines an Bord des Luftfahrzeugs integrierten Rechners bei einer Änderung des Schubkraftsollwerts ($N1_{SOLL}$) des Turbostrahltriebwerks, wobei die effektive Schubkraft ($N1_{EFF}$) des Turbostrahltriebwerks während einer Übergangsphase geändert wird, um den gewünschten Schubkraftsollwert ($N1_{SOLL}$) zu erreichen, wobei das Verfahren umfasst:

    - einen Schritt des Verarbeitens des Schubkraftsollwerts ($N1_{SOLL}$) mittels einer Filterfunktion (F) und eines Übergangsphasenmodells (M), das durch Erfahrungsgewinn ausgehend von an ein und demselben Typ von Turbostrahltriebwerk durchgeführten Messungen erhalten wird, um eine modellierte Schubkraft ($N1_{MOD}$) zu erhalten;
    - einen Schritt des Messens der effektiven Schubkraft ($N1_{EFF}$);
    - einen Schritt des Vergleichens der modellierten Schubkraft ($N1_{MOD}$) mit der effektiven Schubkraft ($N1_{EFF}$), um eine Schubkraftdifferenz ($\Delta$) zu bestimmen;
    - einen Schritt des Vergleichens der Schubkraftdifferenz ($\Delta$) mit einer Alarmschwelle (S); und
    - einen Schritt des Ausgebens eines Alarms im Falle einer Überschreitung der Alarmschwelle (S);

wobei das Verfahren **dadurch gekennzeichnet ist, dass**:

    - bei einer gegebenen Iteration, wobei eine frühere modellierte Schubkraft ($N1_{MOD(OLD)}$) bekannt ist, das Übergangsphasenmodell eine Zeitkonstante (T) ausgehend von der früheren modellierten Schubkraft ($N1_{MOD(OLD)}$) liefert, die Filterfunktion (F) eine modellierte Schubkraft ($N1_{MOD}$) ausgehend von der erhaltenen Zeitkonstante (T), der früheren modellierten Schubkraft ($N1_{MOD(OLD)}$) und des Schubkraftsollwerts ($N1_{SOLL}$) liefert.

2. Verfahren nach Anspruch 1, wobei eine Initialisierung der Filterfunktion (F) in Abhängigkeit vom Vorzeichen der Schubkraftdifferenz ($\Delta$) beim Start des Turbostrahltriebwerks ausgeführt wird, wobei die frühere modellierte Schubkraft ($N1_{MOD(OLD)}$) gleich der effektiven Schubkraft ($N1_{EFF}$) des Turbostrahltriebwerks bei dieser Initialisierung ist.

3. Verfahren nach Anspruch 1 oder 2, wobei die Filterfunktion (F) eine Tiefpassfunktion, vorzugsweise eine Übertragungsfunktion 2. Ordnung ist.

4. Verfahren nach einem der Ansprüche 1 bis 3, wobei das Turbostrahltriebwerk eine Leerlaufdrehzahl-Regulierungsvorrichtung umfasst, die dazu angepasst ist, einen von einem Gashebel definierten Sollwert ($N1_{HEBEL}$) durch einen Leerlaufdrehzahlwert ($N1_{LEER}$) in Abhängigkeit von bestimmten Umgebungsbedingungen des Turbostrahltriebwerks zu unterbrechen, das Verfahren zur Überwachung einer zu hohen Schubkraft einen Schritt des Messens von mindestens einem Umgebungsparameter des Turbostrahltriebwerks umfasst, um zu definieren, ob der Sollwert des Gashebels ($N1_{HEBEL}$) durch den Leerlaufdrehzahlwert ($N1_{LEER}$) unterbrochen wird.

5. Verfahren nach Anspruch 4, wobei das Überwachungsverfahren eine Bestimmung eines modellierten Leerlaufdrehzahlwertes ($N1_{LEER-MOD}$) mittels eines Leerlaufdrehzahlmodells ($M_{LEER}$) umfasst, das einen modellierten Leerlaufdrehzahlwert ($N1_{LEER-MOD}$) mit einem oder mehreren Werten von Umgebungsparametern des Turbostrahltriebwerks verknüpft.

6. Verfahren nach Anspruch 5, wobei das Leerlaufdrehzahlmodell ($M_{LEER}$) einen modellierten Leerlaufdrehzahlwert ($N1_{LEER-MOD}$) mit dem Umgebungsdruck des Turbostrahltriebwerks und/oder der Umgebungstemperatur des Turbostrahltriebwerks verknüpft.

7. Verfahren nach einem der Ansprüche 1 bis 6, wobei die Alarmschwelle (S) eine parametrierbare Schwelle ist, das Turbostrahltriebwerk Mittel zum Überwachen des Zustands von mindestens einer Nebenbedingung (COND1, COND2) des Turbostrahltriebwerks umfassend, im Falle des Erkennens eines anormalen Zustands der Nebenbedingung (COND1, COND2) ein Strafparameter (PEN1, PEN2) auf die Alarmschwelle (S) angewendet wird.

8. Verfahren nach dem vorstehenden Anspruch, wobei ein Strafparameter (PEN1, PEN2) auf die Alarmschwelle (S) angewendet wird, der von der Kritikalität der überwachten Nebenbedingung (COND1, COND2) abhängig ist.

## Claims

1. Method for monitoring a thrust fault in an aircraft turbojet enginerby means of an on-board computer of said aircraft when a thrust setting ($N1_{CONS}$) of said turbojet engine is modified, the effective thrust ($N1_{EFF}$) of the turbojet engine being modified during a transient phase to attain the desired thrust setinf ($N1_{CONS}$),
said method comprising:

    - a step of processing the thrust setting ($N1_{CONS}$) by means of a filtering (F) function and a transient-phase model (M) obtained by feedback from measurements made on the same type of turbojet engine in order to obtain a modelled thrust ($N1_{MOD}$);
    - a step of measuring the effective thrust ($N1_{EFF}$);
    - a step of comparing said modelled thrust ($N1_{MOD}$) with said effective thrust ($N1_{EFF}$) in order to determine a thrust difference ($\Delta$);
    - a step of comparing said thrust different ($\Delta$) with an alarm threshold (S); and
    - a step of emitting an alarm in the event of said alarm threshold (S) being exceeded;

in which method :

    - at a given iteration, in which a prior modelled thrust ($N1_{MOD(OLD)}$) is known, the transient-phase model supplies a time constant (T) from the prior modelled thrust ($N1_{MOD(OLD)}$), the filtering (F) function supplies a modelled thrust ($N1_{MOD}$) from the time (T) constant obtained, the prior modelled thrust ($N1_{MOD(OLD)}$) and the thrust setting ($N1_{CONS}$).

2. Method according to claim 1, wherein the filtering function (F) is initialised depending on the sign of the thrust difference ($\Delta$) when the turbojet engine is started, the prior modelled thrust ($N1_{MOD(OLD)}$) being equal to the effective thrust ($N1_{EFF}$) of the turbojet engine during this initialisation.

3. Method according to claim 1 or 2, wherein the filtering (F) function is a low-pass function, preferably, a transfer function of order 2.

4. Method according to one of claims 1 to 3, wherein, as the turbojet engine comprises an idle-speed regulating device for pre-empting a setting ($N1_{MAN}$), defined by means of throttle control lever, by an idle speed value ($N1_{RAL}$) depending on determined ambient conditions of the turbojet engine, the method comprises, for the monitoring of an over-thrust, a step of measuring at least one ambient parameter of the turbojet engine in order to define whether the throttle control lever setting ($N1_{MAN}$) is pre-empted by the idle speed value ($N1_{RAL}$).

5. Method according to claim 4, wherein the monitoring method comprises a determination of a idle speed value ($N1_{RAL-MOD}$) modelled by means of an idling model ($M_{RAL}$) which associates a modelled idle speed value ($N1_{RAL-MOD}$) with one or more ambient parameter values of the turbojet engine.

6. Method according to claim 5, wherein the idling model ($M_{RAL}$) associates a modelled idle speed value ($N1_{RAL-MOD}$) to the ambient pressure of the turbojet engine and/or the ambient temperature of the turbojet engine.

7. Method according to one of claims 1 to 6, wherein the alarm threshold (S) is a threshold that can be parametrised, the turbojet engine comprising means for monitoring the state of at least one auxiliary condition (COND1, COND2) of the turbojet engine, a penalty parameter (PEN1, PEN2) is applied to said alarm threshold (S) in case an abnormal state of said auxiliary condition (COND1, COND2) is detected.

8. Method according to the preceding claim, wherein a penalty parameter (PEN1, PEN2) is applied to said alarm threshold (S) which depends on the criticality of the auxiliary condition (COND1, COND2) being monitored.

$$N1_{CONS} \longrightarrow \boxed{\underline{1}} \xrightarrow{\quad N1_{MOD} \quad} \oplus \xrightarrow{\Delta} \boxed{>} \longrightarrow \text{ALARME}$$

$$N1_{EFF}$$

$$S$$

## FIGURE 1

INIT

$$N1_{MOD} = \frac{N1_{CONS}}{(1 + \tau(N1_{MOD(OLD)}).p).(1 + \tau(N1_{MOD(OLD)}).p)}$$

$$N1_{CONS} \longrightarrow \qquad \longrightarrow N1_{MOD}$$

$$\tau \qquad N1_{MOD}$$

$$N1_{MOD(OLD)}$$

M

## FIGURE 2

**FIGURE 3**

**FIGURE 4**

**FIGURE 5**

**FIGURE 6**

**FIGURE 7**

**FIGURE 8**

## RÉFÉRENCES CITÉES DANS LA DESCRIPTION

**Documents brevets cités dans la description**

- US 2883330 A
- EP 1420153 A